Europäisches Patentamt

European Patent Office

Office européen des brevets

(19)

(11) EP 0 747 678 B1

(12) FASCICULE DE BREVET EUROPEEN

(45) Date de publication et mention
de la délivrance du brevet:
**15.03.2000 Bulletin 2000/11**

(51) Int Cl.7: **G01G 3/12**, G01G 19/44,
G01L 1/24

(21) Numéro de dépôt: 96401187.8

(22) Date de dépôt: 04.06.1996

(54) **Appareils de mesure de force à capteur optique permettant la limitation de défauts d'excentration, notamment pour un pèse-personne**

Kraftmesseinrichtungen mit optischem Sensor mit vom Lastort unabhängiger Empfindlichkeit ,insbesondere Personenwaage

Force measuring devices with optical sensor compensating off-centre loading, particularly for weighing persons

(84) Etats contractants désignés:
**BE DE ES IT NL**

(30) Priorité: **09.06.1995 FR 9506853**
**20.03.1996 FR 9603454**

(43) Date de publication de la demande:
**11.12.1996 Bulletin 1996/50**

(73) Titulaire: **SEB S.A.**
**69130 Ecully (FR)**

(72) Inventeurs:
• **Pitaud, Bernard**
**74000 Annecy (FR)**
• **Patras, Yves**
**74150 Rumilly (FR)**
• **Duborper, Alain**
**74150 Sales (FR)**
• **Sarrazin, Michel**
**74150 Massingy (FR)**
• **Linglin, Benoît**
**74350 Cruseilles (FR)**

(74) Mandataire: **Lepercque, Jean et al**
**NOVAMARK TECHNOLOGIES,**
**"Anciennement Brevets Rodhain & Porte",**
**IMMEUBLE VICTORIA MICHELET,**
**122, rue Edouard Vaillant**
**92593 Levallois Perret Cedex (FR)**

(56) Documents cités:
**EP-A- 0 153 997**       **DE-A- 4 132 110**
**FR-A- 2 632 065**       **GB-A- 2 214 771**

## Description

L'invention concerne des appareils de mesure de force à capteur optique permettant la limitation de défauts d'excentration, plus particulièrement un appareil de mesure dont le capteur optique est à base de fibre optique.

Elle concerne également, mais non exclusivement, l'application d'un tel appareil de mesure à un appareil de pesage du type pèse-personne.

Il est bien connu que, lorsqu'une force de même amplitude (ou un même poids) est appliquée en différents points d'un capteur, l'amplitude du signal mesuré peut varier d'un point à un autre. Il y a apparition d'un défaut dit "d'excentration". L'invention concerne un appareil visant à limiter les variations du signal mesuré dues à cet effet parasite.

De nombreux appareils de pesage utilisent des jauges d'extensométrie collées sur des corps d'épreuve. Ce principe présente l'inconvénient de nécessiter des réglages de sensibilité car le signal obtenu est sensible au point d'application de la force mesurée.

Pour pallier ces inconvénients, on a proposé de remplacer les jauges d'extensométrie par un capteur optique, notamment par un capteur optique à base de fibre optique.

En ce qui concerne les capteurs à fibre optique, il existe trois grandes familles : les capteurs d'intensité, les capteurs interférométriques et les capteurs polarimètriques.

La base d'un capteur polarimétrique est une fibre optique monomode, par exemple une fibre optique standard à base de silice qui peut posséder intrinsèquement une très faible biréfringence (fibre optique dite "LoBi" ou "Low Birefringence", ou d'une fibre plus classique dont la biréfringence résiduelle est très faible). On injecte dans cette fibre optique une lumière polarisée linéairement. Pour ce faire, on peut utiliser comme source lumineuse un laser, par exemple une diode laser. Cependant, la lumière émise ne possède pas une direction de polarisation privilégiée. Aussi, il est nécessaire avant de l'injecter dans la fibre optique, de la polariser linéairement à l'aide d'un polariseur.

On soumet la fibre optique à une contrainte, une force de pression (poids) dans le cas de l'invention. Cette pression induit une biréfringence qui modifie l'état de la polarisation. En effet, le coeur, ainsi d'ailleurs que la gaine de la fibre optique, deviennent elliptiques, ce phénomène étant à la base de la biréfringence induite.

La force F s'exerçant sur la fibre optique (poids déposé sur le plateau de pesage) se déduit du déphasage φ dû à la biréfringence par la relation suivante :

$$F = \frac{\lambda_{vide}}{2K\pi} \cdot \Delta\varphi \qquad (1);$$

avec $\lambda_{vide}$ longueur d'onde de l'onde lumineuse dans le vide et $K$ une constante telle que :

$$K = \frac{4n^3}{\pi} \cdot \frac{1 + \upsilon}{E} \cdot (P_{12} - P_{11}) \cdot \frac{1}{2r} \qquad (2);$$

avec :

| | | |
|---|---|---|
| $n$ | indice de réfraction du matériau dans le coeur | $n = 1{,}458$ |
| $P_{12}$ | coefficient de la matrice photo-élastique | $P_{12} = 0{,}27$ |
| $P_{11}$ | coefficient de la matrice photo-élastique | $P_{11} = 0{,}121$ |
| $\nu$ | coefficient de Poisson | $\nu = 0{,}17$ |
| $E$ | module de Young de la silice | $E = 7 \cdot 10^{10}$ N/m$^2$ |
| $2r$ | diamètre de la fibre | $2r = 125$ $\mu$m |

La relation (1) montre clairement que le déphasage φ est directement fonction de la force $F$ (poids) appliquée sur la fibre optique et, en outre, qu'il est indépendant de la longueur L de fibre optique contrainte.

De façon pratique, pour mesurer le déphasage en sortie de la fibre optique, on mesure l'intensité lumineuse à l'aide d'un convertisseur optoélectronique. Il s'agit généralement d'une photodiode qui détecte l'intensité lumineuse précitée et la convertit en signal électrique de sortie. L'intensité lumineuse $I$ obéit à la relation suivante :

$$I = I_0 \cdot (1 + \cos(\Delta\varphi)) \qquad (3);$$

avec $I_0$ intensité sans déphasage, c'est-à-dire en l'absence de contraintes.

Enfin, si on place, entre la source lumineuse et la fibre optique, une lame optique quart d'onde et un polariseur imposant une orientation θ, l'intensité obtenue obéit à la relation suivante :

$$I = I_0 \cdot (1 + \cos(\Delta\varphi - 2\theta)) \tag{4}.$$

Un appareil de mesure de ce type a été proposé dans la demande de brevet français N° 95 06853 déposée le 9 juin 1995, au nom de la Demanderesse (FR-A-2 735 230 publié 13.12.96).

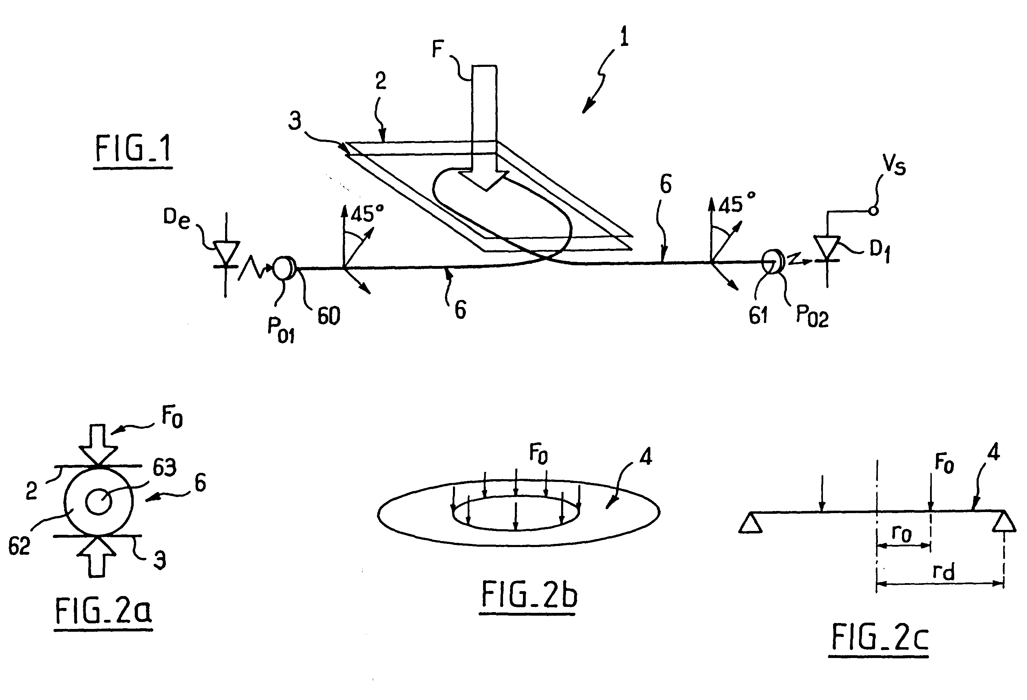

La figure 1 illustre schématiquement sa structure générale.

L'appareil de mesure 1 comprend un socle 3 surmonté d'un plateau 2, sur lequel on applique une force $F$ suivant une direction perpendiculaire aux plans que forment les socle 3 et plateau 2. Entre ces deux organes, on a disposé une fibre optique 6, avantageusement enroulée sur elle-même de manière à former une ou plusieurs spires. Naturellement, le rayon de courbure des spires doit rester compatible avec les caractéristiques mécaniques de la fibre optique.

Dans l'exemple représenté, l'appareil de mesure 1 comprend une source de lumière $D_e$, par exemple une diode laser semi-conductrice. Entre une première extrémité 60 de la fibre optique 6, ou face d'entrée, et cette diode $D_e$, on dispose un premier polariseur $P_{o1}$. De même, un second polariseur, ou analyseur, $P_{o2}$ est disposé entre la seconde extrémité 61 de la fibre optique 6 et un convertisseur optoélectronique $D_1$, par exemple une photodiode. Cette dernière convertit l'intensité lumineuse reçue en un signal électrique de sortie $V_S$. Les axes de polarisations sont parallèles entre eux et forment de préférence un angle de 45° avec la direction d'application de la force $F$. Naturellement, il est généralement nécessaire de prévoir divers éléments optiques supplémentaires, notamment de focalisation, bien connus en soi.

Le signal électrique de sortie $V_S$ est ensuite traité par des circuits électroniques classiques, sous forme analogique ou, de façon préférentielle, sous forme numérique. Il suffit, pour ce faire, de disposer d'un convertisseur analogique-numérique et de circuits de commande d'un afficheur numérique, par exemple à cristaux liquides. On peut également utiliser un microprocesseur, auquel on assigne diverses fonctions pré-programmées.

L'appareil de mesure de force qui vient d'être rappelé brièvement présente de nombreux avantages et notamment :

- une intégration de l'effet le long de la fibre optique 6, c'est-à-dire mesure du déphasage total ;
- une influence faible vis-à-vis du centrage qui ne dépend que des conditions de liaison plaques-fibres ;
- une très faible épaisseur, l'épaisseur propre à l'élément optique (fibre optique 6) étant pratiquement négligeable (typiquement de l'ordre du 1/10 de millimètre) ;
- un déplacement très faible également ;
- une grande sensibilité : typiquement 20 g pour une portée de 140 kg et une longueur de fibre optique de 1,5 m ;
- et de nombreuses possibilités de constructions car la charge est répartie sur tout un anneau de fibre optique.

En particulier, selon un mode de construction préféré, on recourt à des structures circulaires, voire annulaires, c'est-à-dire ayant une zone centrale évidée.

Cependant, il a pu être constaté que, contrairement à ce que laisse prévoir la théorie, les défauts d'excentration sont importants, typiquement de l'ordre de ± 1 %.

Aussi, tout en conservant les avantages des appareils du type qui vient d'être rappelé, l'invention se fixe pour but la limitation des effets parasites des défauts d'excentration.

L'invention a donc pour objet un appareil de mesure de force à capteur optique, comprenant un plateau de mesure sur lequel on applique une force à mesurer, un socle et un capteur optique de mesure de contraintes dues à ladite force à mesurer, le capteur étant du type polarimétrique comprenant au moins une fibre optique disposée entre ledit plateau et ledit socle, ladite fibre optique étant le siège d'une biréfringence induite lorsqu'elle est soumise à une force de pression selon un diamètre, caractérisé en ce qu'il comprend en outre des moyens élastiques exerçant une précontrainte d'amplitude prédéterminée sur ladite fibre optique, de manière à diminuer des défauts dits "d'excentration" et en ce que ces moyens élastiques comprennent une plaque supérieure et une plaque inférieure, disposées de part et d'autre de ladite fibre optique et en contact avec elle, de manière à former une structure de contact transmettant aussi la force à mesurer, et des moyens permettant de rapprocher ces deux plaques de manière à compresser la fibre optique et obtenir ladite précontrainte d'amplitude prédéterminée. Revendicatons 1, 5, 7.

L'invention a encore pour objet un pèse-personne comprenant un tel appareil de mesure de force. Revendication 10.

L'invention sera mieux comprise et d'autres caractéristiques et avantages apparaîtront à la lecture de la description qui suit en référence aux figures annexées, et parmi lesquelles :

- La figure 1 illustre schématiquement le principe de fonctionnement d'un appareil de mesure de force mettant en oeuvre une configuration polarimétrique de capteur optique ;
- La figure 2a illustre schématiquement une fibre optique soumise à une précontrainte permanente ;
- Les figures 2b et 2c sont des constructions géométriques illustrant le diagramme des forces de précontrainte ;
- Les figures 3a à 3c illustrent un premier mode de réalisation d'un appareil de mesure de force selon l'invention ;
- Les figures 4a à 4e illustrent le phénomène de déformation d'une fibre optique soumise à une force d'écrasement ;
- La figure 5 illustre un mode de réalisation préféré d'un appareil de mesure de force selon l'invention ;
- La figure 6 illustre une variante supplémentaire du premier mode de réalisation.

Si on se reporte à la figure 1, les défauts d'excentration sont essentiellement imputables à la non-planéité des plaques formant le socle 3 et le plateau 2, et plus précisément des surfaces en contact avec la fibre optique 6 et mettant celle-ci en compression, ou à la variation du diamètre des fibres optiques (typiquement $\pm$ 3 $\mu$m).

En effet, certaines parties de la fibre optique 6 ne sont pas ou peu en contact avec le socle 3 et le plateau 2, d'où l'irrégularité constatée dans les résultats de mesure lorsque qu'une même charge est appliquée en différents endroits.

Une première solution consisterait à rectifier les surfaces. A titre d'exemple, une expérimentation a été menée en utilisant des plaques en Pyrex à surface rectifiées, tout en conservant la structure qui vient d'être décrite. Les défauts précédemment constatés ont disparu, pour le moins les défauts résiduels sont négligeables.

Cependant, cette solution, bien qu'elle donne des résultats techniques satisfaisants, n'est pas économiquement viable dans le cas de l'application principale visée par l'invention, c'est-à-dire des appareils de mesure de force de type grand public. En effet, pour ce type d'appareils, le prix de revient doit être le plus bas possible, pour des niveaux de précision et de qualité donnés.

Aussi, conformément à un premier mode de réalisation de l'invention, tout en conservant la structure générale qui vient d'être décrite, on va adopter des dispositions particulières propres à atténuer très fortement les défauts constatés, sans augmenter, de façon significative, ni la complexité de l'appareil, ni son prix de revient.

Pour remédier à ce défaut, selon une caractéristique importante de l'invention, on soumet la fibre optique 6 à une précontrainte d'amplitude prédéterminée.

La figure 2a illustre schématiquement une fibre optique 6 soumise à une précontrainte permanente, référencée $F_0$. Cette dernière comprend habituellement une enveloppe de protection 62, par exemple en epoxy-acrylate ou en polyacrylate, et la fibre optique proprement dite 63, formant guide d'onde. Celle-ci comprend un coeur et une gaine, toutes deux en verre pour assurer de bonnes qualités métrologiques. La gaine 62 assure une bonne protection mécanique.

La construction de l'appareil doit être dimensionnée de manière à ce que la fibre optique 6 subisse à pleine charge une force inférieure à sa limite élastique, typiquement inférieure à 1 N/mm. Dans ce cas, la longueur de fibre comprimée est de 1 m minimum.

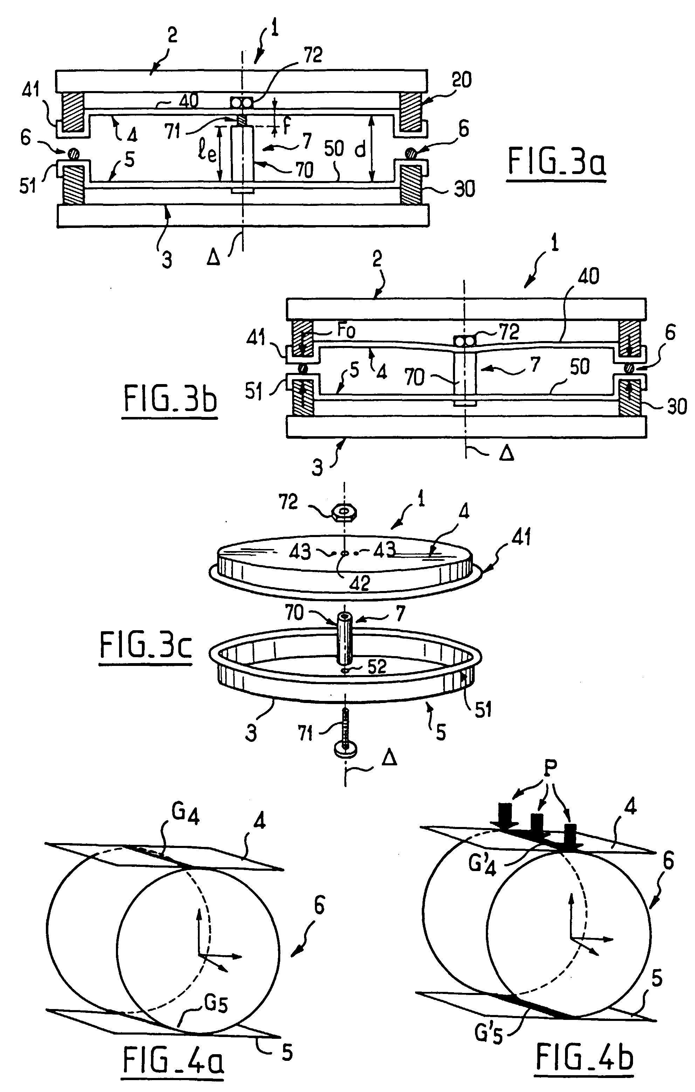

Un exemple de réalisation d'un appareil de mesure de force 1 conforme à l'invention est illustré schématiquement par les figures 3a à 3c. Plus particulièrement, la figure 3a illustre, en coupe, l'appareil 1 avant montage, et la figure 3b après montage. La figure 3c est une vue éclatée, illustrant un détail de l'appareil 1. On supposera que la structure de l'appareil de mesure de force 1 est de révolution circulaire.

L'appareil de mesure de force 1 comprend, comme précédemment, un socle 3, surmonté d'un plateau 2. Il comprend, en outre, un disque inférieur 5 et un disque supérieur 4 en matériau élastique, disposés entre le socle 3 et le plateau 2. Compte-tenu de l'ordre de grandeur de la force de précontrainte à exercer, il s'agit préférentiellement de disques métalliques, dimensionnés de telle sorte qu'ils restent dans une zone de déformation élastique. Les disques, 4 et 5, comportent des zones centrales circulaires, 40 et 50, respectivement, entourées de couronnes en forme de "U", 41 et 51, respectivement. Les disques, 4 et 5, sont disposés tête-bêche, de manière à ce que les fonds des "U" soient en vis à vis et séparés par la seule épaisseur de la fibre optique 6. Ce sont ces fonds qui vont exercer une force de précontrainte permanente $F_0$ sur la fibre optique 6, au repos, et une force à mesurer $F$, lors de la mesure. De façon plus précise, la force $F$ exercée sur la fibre optique 6 est alors égale au poids $P$ placé sur le plateau 2, additionné de la force de précontrainte $F_0$. Il est aisé de retrancher cette force $F_0$, puisqu'elle est connue et constante. On en déduit alors la valeur de la seule force à mesurer $F$.

Dans la zone centrale des disques, 4 et 5, on dispose des moyens 7 de permettant le rapprochement des disques, 4 et 5. Ces moyens comprenent, dans l'exemple décrit, une entretoise 70, dont la longueur $l_e$ est inférieure à la distance $d$ séparant les deux disques à l'état initial (voir figure 3a). De façon plus précise la longueur $l_e$ de l'entretoise 70 obéit à la relation suivante :

$$I_e = d - f \qquad\qquad (5);$$

avecf la flèche que l'on veut obtenir lorsque les plaques vont être rapprochées l'une de l'autre nour obtenir une nré-contrainte déterminée telle que :

$$f = -\frac{P}{8\pi D} \cdot \left[ r_0^2 \cdot Ln(\frac{r_0}{a}) + (r_d^2 - r_0^2) \cdot \frac{(3+\nu)}{2(1-\nu)} \right] \qquad (6);$$

avec :

$D$ :   coefficient de raideur de la plaque.

De façon plus précise D obéit à la relation suivante :

$$D = \frac{Eh^3}{12(1 - r_d^2)} \qquad\qquad (7);$$

et

$h$ :   épaisseur du disque 4 ;
$E$ :   module de Young ;
$\nu$ :   coefficient de Poisson ;
$r_d$ :   rayon du disque ;
$r_0$ :   distance du centre de la plaque 4 à la répartition circulaire de la force $F_0$.

Les figures 2b et 2c illustrent le diagramme des forces, avec les paramètres ci-dessus, respectivement en vue dans l'espace et de côté.

Pour obtenir la flèche $f$ précitée, on peut utiliser un système classique "vis 71 - écrou 72" qui rapproche, lorsque l'on visse à fond l'écrou 72, les deux plaques, 4 et 5 (voir figures 3a et 3b). Dans cet état, les fonds des couronnes, 41 et 51, exercent sur la fibre optique 6 une force de précontrainte permanente $F_0$.

A titre d'exemple, si la précontrainte à obtenir est de 20 kg force, avec une plaque d'acier d'épaisseur 1 mm, un diamètre $r_d$ du disque 4 égal à 50 mm et $r_0$ égal à 5 mm, la flèche $f$ doit alors être égale à 1,25 mm. Connaissant $d$, qui est un paramètre de construction, on en déduit aisément la longueur $I_e$ de l'entretoise 70 d'après la relation (5) ci-dessus.

La figure 3c illustre de façon plus précise, en éclaté, la structure des plaques 4 et 5.

Celles-ci comportent, en leurs centres, des orifices, 42 et 52 respectivement, laissant passer la tige de la vis de serrage 71. Il faut, en outre, prévoir des moyens interdisant, une fois le serrage effectué, toute rotation des disques 4 et 5, l'un par rapport l'autre pour éviter d'abîmer la fibre optique 6 disposée en spirale entre les fonds des couronnes, 41 et 51. Pour ce faire, on peut prévoir des trous périphériques 43, autour du trou central 42, comme illustré sur la figure 3c. On peut encore prévoir un trou central 42 carré ou rectangulaire, ce qui évite également ce phénomène indésirable de rotation.

Le socle 3 et le plateau 2 sont réunis à l'ensemble formé par les deux disques joints, 4 et 5, via deux couronnes périphériques : une couronne 30 disposée au-dessus du socle 3 et une couronne 20 disposée en dessous du plateau 2. Ces couronnes, 30 et 20, sont fixées, sur une des extrémités, au socle 3 et au plateau 2, respectivement. L'autre extrémité est insérée dans les gorges que formes les couronnes, 51 et 41, respectivement.

La précontrainte, conformément au mode de réalisation décrit, permet de diminuer fortement les défauts d'excentration.

Cependant, la fibre optique utilisée dans le cadre de l'invention est faiblement biréfringente. Son coeur est avantageusement en silice et sa gaine également. L'enveloppe de protection 62 (figure 2a) est par exemple, comme il a été indiqué, en polyacrylate. Son épaisseur est typiquement de 15 micromètres. Aussi, lorsque la fibre optique 6 est précontrainte entre les deux plaques, 4 et 5, comme il vient d'être décrit, la gaine extérieure 62 se déforme, d'abord de façon élastique, puis de façon viscoélastique. On parle alors de "fluage".

La Demanderesse a par ailleurs observé, lors de tests de fluage avec des fibres optiques gainées, que celles-ci se déformaient lors des premiers essais de fluage et ne reprenaient plus leurs formes initiales. Tout se passe comme si elles étaient, d'une certaine manière, "matées" par les premières séries d'expérience de fluage.

L'invention tire un parti avantageux de ces constatations, comme explicité ci-après.

Pour ce faire, on accélère le phénomène de plasticité de l'enveloppe de protection.

Le procédé de réalisation de l'appareil de mesure de force selon l'invention comprend les étapes suivantes :

a/ compression de la fibre optique destinée à l'appareil de mesure entre deux plaques ;
b/ chauffage de la fibre optique maintenue sous pression, à une température déterminée, ou soumission de celle-ci à une attaque chimique, l'un ou l'autre de ces états étant maintenu pendant un intervalle de temps également déterminé.

Le chauffage s'effectue en étuve. La température et l'intervalle de temps précités dépendent naturellement du matériau constituant la gaine de protection. Avec du polyacrylate, la température est comprise typiquement dans une gamme de 100 °C à 200 °C, et la durée de passage à l'étuve comprise typiquement entre ½ heure et 2 heures.

La fibre optique 6 épouse alors parfaitement les formes des plaques 3 et 4, plus précisément (dans l'exemple décrit) des fonds des couronnes 31 et 41, entre lesquelles elle est disposée. Une partie de l'enveloppe extérieure (figure 2a : 62) va être chassée de la zone de contact entre la fibre optique proprement dite (figure 2a : 63), d'une part, et les fonds des couronnes supérieure 41 et inférieure 31, d'autre part.

L'attaque chimique s'effectue de façon classique, à l'aide d'un produit connu des utilisateurs de fibres optiques sous le nom anglo-saxon de "stripper". Un solvant efficace tel que le "NMP" (N Methyl Pyrolidone) remplit bien cette fonction.

Ce phénomène limite le fluage et ses conséquences néfastes.

Cependant, cette disposition peut entraîner à son tour des effets non désirés. En effet, n'étant plus protégée extérieurement ou pour le moins mal protégée (du fait de la disparition de tout ou partie du matériau de l'enveloppe), la fibre optique 6 devient extrêmement sensible à son environnement thermique et à son environnement mécanique direct (dans la zone de contact "fibre optique 6 - structure, 31 et 41"). Il s'ensuit des phénomènes de non-linéarité, ce qui entraîne aussi des défauts d'excentration.

S'il est relativement aisé de compenser numériquement les effets de variations de température (par exemple en les mesurant à l'aide d'une varistance), il est par contre beaucoup plus difficile de compenser les variations de contact dans les zones de contact "fibre - structure".

Aussi, selon un mode de réalisation supplémentaire de l'appareil de mesure selon l'invention, on prévoit des dispositions spécifiques permettant de pallier les défauts d'excentration précités.

Il est utile, tout d'abord, de rappeler que le déphasage dû à la biréfringence est directement proportionnel au poids déposé sur le plateau ou, de façon plus générale, à la force appliquée à celui-ci, conformément aux relations (1) et (2) ci-dessus.

Cette relation repose notamment sur la théorie de Hertz des contacts entre un cylindre de longueur infini avec deux plaques entre lesquelles il est situé. En effet, la fibre optique 6 peut être assimilée à un tel cylindre, même si sa longueur est naturellement finie.

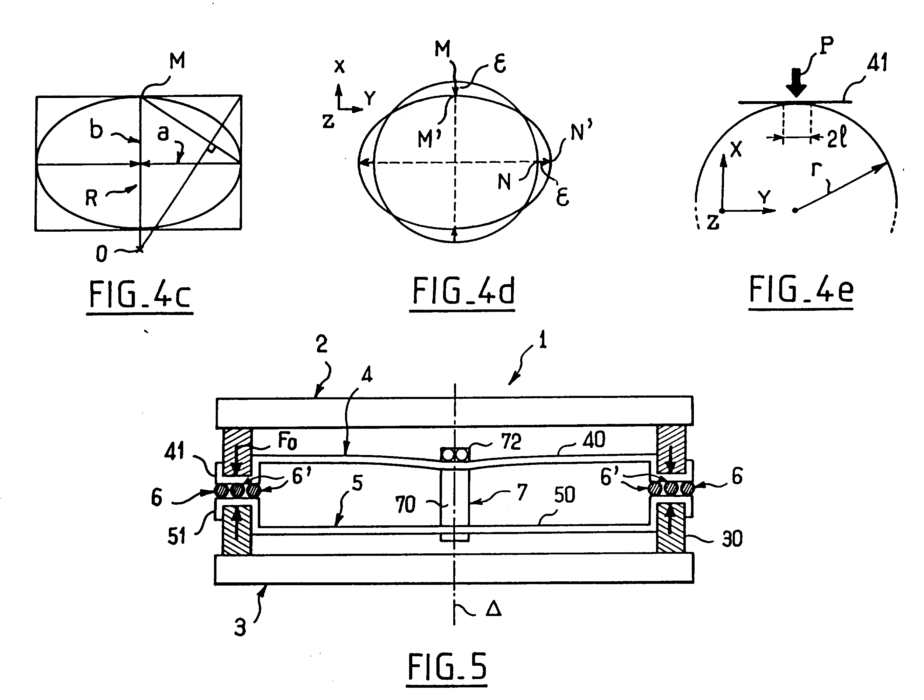

Comme le montre la figure 4a, il existe deux génératrices de contact, $G_4$ et $G_5$, entre le cylindre (c'est-à-dire la fibre optique 6) et les deux plaques, 4 et 5, lorsque celui-ci n'est pas déformée par la présence d'une charge.

Lorsque le cylindre est chargé (poids *P*), les génératrices, comme le montre la figure 4b, vont s'élargir au fur et à mesure que la charge augmente, se transformant en deux surfaces de contact, $G'_4$ et $G'_5$. Dans le même temps, la forme circulaire originelle de la fibre optique 6 devient elliptique.

Les figures 4c à 4e sont des constructions géométriques mettant en évidence les principaux paramètres mis en jeu.

La section de la fibre optique 6 est une ellipse inscrite dans un rectangle. Le point M supérieur de l'ellipse étant le point où la charge est déposée, c'est-à-dire le point où la force est appliquée. En ce point M la courbure varie avec l'amplitude de cette force appliquée.

On appelle *b* le demi petit-axe de l'ellipse (vertical sur la figure 4c) et *a* le demi grand-axe de l'ellipse (horizontal sur la figure 4c). On appelle R le rayon de courbure de l'ellipse en M, soit :

$$R = \text{OM} = \frac{a^2}{b} \qquad (8)$$

Le coefficient *K* précité (voir relation (2)) dépend de cette courbure R. On peut supposer théoriquement que *R = r*, avec *r* rayon de la fibre optique 6.

On peut également admettre que le périmètre de la fibre optique 6, initialement circulaire, reste constant.

Lorsqu'on charge le plateau de mesure par un poids $P$ (ou plus généralement lorsqu'on applique une force), le point M s'affaisse suivant un axe vertical, c'est-à-dire l'axe x d'un trièdre orthonormé xyz, comme le montre la figure 4d. Le point M se déplace en M', avec MM' = ε. De même, le point N (sur l'axe horizontal y) se déplace en N', avec NN' = ε.

En faisant appel à la théorie de Hertz, on montre que :

$$\sigma_x = \sigma_y = P_0 = \frac{2 \cdot P}{\pi \cdot l} \tag{9};$$

relation dans laquelle $\sigma_x$ et $\sigma_y$ sont des contraintes portées par les axes x et y (vertical et horizontal, respectivement) et 21 la largeur de la zone de la bande de contact avec le fond de la couronne 41 du disque 4.

On peut également démontrer que le champ de déformation dans la fibre optique est tel que :

$$d_x = \frac{1}{E} \cdot (\sigma_x - \nu \cdot \sigma_y) \tag{10};$$

or $\sigma_x = \sigma_y = P_0$, donc la relation suivante est satisfaite :

$$d_x = \frac{1}{E} \cdot (1 - \upsilon) \cdot P_0 \tag{11}$$

Si le rayon $r$ de la fibre optique est égal à 62,5 μm et le poids P égal à 120 kg, $E$ étant égal à 6,5 $10^{10}$, dans ce cas $d_x$ = 2,3 $10^{-3}$ mm.

L'affaissement de M en M' est alors d'environ : 62,5 $10^{-6}$ x 2,3 $10^{-3}$, soit ε = 0,15 μm. Par application de la relation (8), le nouveau rayon de courbure en M devient :

$$R = \frac{a^2}{b} = \frac{(r + \varepsilon)^2}{(r - \varepsilon)} \tag{12}$$

Le rayon de courbure initial étant $R_0 = r$, la variation relative du rayon de courbure $\Delta R$ obéit à la relation suivante :

$$\frac{\Delta R}{R} = \frac{R_0 - R}{R_0} \tag{13};$$

Soit dans l'exemple numérique ci-dessus :

$$\frac{\Delta R}{R} \approx 7 \text{ ‰}$$

En réalité, cette variation n'est valable que pour un chargement parfaitement uniforme de 120 kg, c'est-à-dire une contrainte parfaitement répartie sur la fibre optique. Pour des raisons de non-planéité des surfaces de contact avec la fibre optique, même si la structure est chargée uniformément, il peut apparaître localement des zones pour lesquelles la fibre optique est beaucoup plus contrainte. Il s'ensuit que, dans ces zones, les rayons de courbure peuvent être beaucoup plus importants que l'estimation issue du calcul (application de la relation (13)), pour un poids donné.

Ce phénomène est une des causes possibles de défauts d'excentration.

Selon un mode de réalisation supplémentaire de l'invention, ces défauts peuvent être limités en prévoyant des spires de fibre optique surnuméraires.

La figure 5 illustre schématiquement un exemple d'appareil de mesure de force 1 incorporant les dispositions spécifiques au mode de réalisation supplémentaire. L'appareil illustré reprend la structure de base de l'appareil décrit en regard de la figure 3b et constitue un exemple de réalisation préféré de l'invention, car il est prévu des organes de précontrainte de la fibre optique, le retrait de tout ou partie de la gaine de protection de la fibre optique dans les zones de mesure (pour éviter les phénomènes de fluage) et l'ajout de spires supplémentaires, ici référencée 6' (la spire originelle étant référencée 6).

A titre d'exemple, dans un prototype réalisé par la Demanderesse, dont le diamètre était de 300 mm et comprenant une seule spire de fibre optique de base, les défauts d'excentration étaient d'environ 3 %. Par l'ajout de deux spires surnuméraires, les défauts d'excentration passent à moins de 5‰.

Il est à noter que le nombre de spires "de base" est déterminé essentiellement par la gamme de forces à mesurer et les dimensions de l'appareil (notamment le diamètre des spires). A titre d'exemple, pour un pèse-personne, la gamme s'étend typiquement de 0 à 120 kg.

L'ajout de spires offre de nombreux avantages, dont les suivants :

a/ l'appareil de mesure de force devient beaucoup moins sensible aux chocs ;

b/ le coefficient de sensibilité de la fibre optique devient linéaire et constant, il est donc possible d'effectuer une somme en tout point des retards de phase ;

c/ l'erreur d'excentration est fortement diminuée ;

d/ et le niveau de précontrainte requis devient moins élevé, ce qui simplifie le montage mécanique de l'appareil.

Dans ce qui précède, on a supposé, au moins implicitement, que l'ajout de spires de fibre optique venait en complément de la précontrainte et de retrait partiel ou total de la gaine de protection de la fibre optique. Cette combinaison représente, en effet, un mode de réalisation préféré de l'invention, qui minimise à l'extrême les effets parasites des défauts d'excentration.

On doit bien comprendre cependant que ces dispositions peuvent être dissociées, en d'autres termes l'ajout de spires de fibre optique, à lui seul, permet de minimiser les défauts d'excentration. Cette disposition peut être jugée suffisante pour certaines applications.

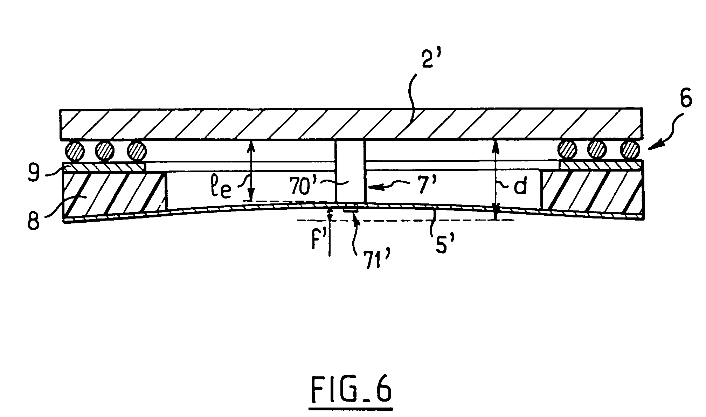

Enfin, la figure 6 illustre une variante supplémentaire du premier mode de réalisation.

Cette variante se caractérise principalement par le fait qu'il est prévu un plateau supérieur rigide 2', dit de "référence". Ce plateau 2' est réalisé en matériau dur, avantageusement en verre ou en aluminium. L'épaisseur de ce plateau rigide 2' est de quelques millimètres, typiquement de l'ordre de 3 mm.

Les enroulements de fibres optiques sont enserrés entre ce plateau 2' et un "plateau souple" 8. En réalité, ce plateau souple 8 est constitué avantageusement par une structure annulaire. La structure annulaire 8 est avantageusement réalisée à base d'un matériau plastique.

De façon plus précise également, une seconde structure annulaire 9 est insérée entre l'anneau 8 et les spires de fibres optiques 6. En effet, si le contact du plateau rigide 2' sur les spires de fibres optiques 6 s'effectue de façon satisfaisante, du fait de la dureté du matériau composant le plateau 2', il n'en serait pas de même si elles étaient directement en contact avec un matériau souple. Aussi, l'anneau 9, qui peut être par ailleurs de faible épaisseur, est réalisé en matériau relativement dur. On peut choisir avantageusement de l'aluminium.

Il reste ensuite à créer une précontrainte. Pour ce faire, on utilise un diaphragme de précontrainte 5' et un système de serrage 7', comprenant une entretoise 70' et un organe de vissage 71'. Cet ensemble 5'-7' joue un rôle similaire au disque inférieur 5 et au système de serrage 7 des dispositifs décrits en regard des figures 3a à 3c ou 5.

Le diaphragme de précontrainte 5' exerce donc une force de pression initiale sur les enroulements de fibre optique 6, via les anneaux 8 et 9, en matériau souple et dur, respectivement. Le diaphragme de précontrainte 5' peut être avantageusement constitué à base d'une tôle d'acier d'épaisseur typique égale à 1 mm.

La méthode de détermination de la précontrainte est similaire à celle décrite en regard des figures 3a et 3b. Dans un état initial, le plateau 2' est situé à une distance $d$ du diaphragme de précontrainte 5' (plan dans cet état). L'entretoise 70', de longueur $l_e < d$, permet de créer une flèche $f'$ à l'aide des moyens de vissage 71' (le diaphragme 5' étant incurvé dans cet état). Le plateau 2' étant rigide ne subit pas de déformations significatives.

A la lecture de ce qui précède, on constate aisément que l'invention atteint bien les buts qu'elle s'est fixés.

Bien entendu, l'invention n'est pas limitée aux seuls exemples de réalisations précisément décrits, notamment en relation avec les figures 3a à 3c ou 5.

En particulier, les valeurs numériques citées dépendent essentiellement de l'application précise visée : type de fibre optique utilisée, gamme de forces ou de poids à mesurer, etc. Il en est de même des matériaux des disques de précontrainte ou des fibres.

Bien que particulièrement bien adaptée, la forme circulaire n'est pas non plus critique.

Bien que particulièrement adaptée à l'application de pesage et notamment aux appareils de type pèse-personne, on ne saurait cantonner l'invention à ce seul type d'application. Comme il a été indiqué, elle s'applique de façon plus générale à la mesure de forces.

**Revendications**

1. Appareil de mesure de force à capteur optique (1), comprenant un plateau de mesure (2) sur lequel on applique une force à mesurer (*P*), un socle (3) et un capteur optique de mesure de contraintes dues à ladite force à mesurer (*P*), le capteur étant du type polarimétrique comprenant au moins une fibre optique (6) disposée entre ledit plateau (2) et ledit socle (3), ladite fibre optique (6) étant le siège d'une biréfringence induite lorsqu'elle est soumise à une force de pression selon un diamètre, caractérisé en ce qu'il comprend en outre des moyens élastiques exerçant une précontrainte d'amplitude prédéterminée sur ladite fibre optique (6), de manière à diminuer des défauts dits "d'excentration" et en ce que ces moyens élastiques comprennent une plaque supérieure (4) et une plaque inférieure (5), disposées de part et d'autre de ladite fibre optique (6) et en contact avec elle, de manière à former une structure de contact transmettant aussi la force à mesurer (*P*), et des moyens (7) permettant de rapprocher ces deux plaques (4, 5), de manière à compresser la fibre optique (6) et obtenir ladite précontrainte d'amplitude prédéterminée.

2.  Appareil selon la revendication 1, caractérisé en ce que, sa structure étant circulaire, lesdites plaques (4, 5) des moyens élastiques sont des disques déformables élastiquement, comprenant chacun une couronne périphérique circulaire (41, 51) dont le fond est en contact avec ladite fibre optique (6), les faces des disques en vis à vis étant situées à une distance déterminée (*d*) l'une de l'autre, dans un l'état initial, en ce que lesdits moyens (7) permettant de rapprocher les zones centrales des deux plaques (4, 5) comprennent une entretoise (70), disposée entre les deux disques (4, 5) dans une zone centrale et de longueur déterminée ($l_e$) inférieure à ladite distance déterminée (*d*), de manière à pouvoir créer une flèche prédéterminée (*f*) au centre d'au moins l'un des disques (4), et des moyens de serrage (71, 72) rapprochant lesdites zones centrales pour obtenir cette flèche (*f*), de manière à créer ladite précontrainte d'amplitude prédéterminée par déformation élastique du disque (4).

3.  Appareil selon la revendication 2, caractérisé en ce que lesdits disques (4, 5) sont percés d'orifices centraux (42, 52), en ce que lesdits moyens de serrage rapprochant lesdites zones centrales des deux disques (4, 5) et créant ladite flèche (*f*) comprennent un ensemble vis - écrou (71, 72), le corps de la vis (71) étant enfilé dans ladite entretoise (70) et dans les orifices centraux (42, 52), en ce que la tête de la vis (71) et l'écrou (72) sont disposés de part et d'autre de l'ensemble formé par les deux disques (4, 5), de manière à rapprocher les zones centrales par vissage de l'écrou (72) sur la vis (71), et à amener les disques (4, 5) en butée contre ladite entretoise (70), et en ce qu'il est prévu, en outre, des moyens (43) pour empêcher un déplacement relatif en rotation de ces disques (4, 5) autour de l'axe (Δ) que forme l'entretoise (70), lorsqu'ils sont en butée contre l'entretoise (70).

4.  Appareil selon la revendication 2, caractérisé en ce que lesdites couronnes périphériques circulaires (41, 51) sont des gorges en forme de "U" placées tête-bêche, en ce que lesdits plateau (2) et socle (3) sont solidaires, chacun, d'un anneau plein (20, 30) et en ce que ces anneaux pleins (20, 30) sont introduits dans lesdites gorges en forme de "U", de manière à être rendus solidaires des couronnes périphériques circulaires (41, 51).

5.  Appareil de mesure de force à capteur optique (1), comprenant un plateau de mesure (2') sur lequel on applique une force à mesurer (*P*) et un capteur optique de mesure de contraintes dues à ladite force à mesurer (*P*), le capteur étant du type polarimétrique comprenant au moins une fibre optique (6) disposée sous ledit plateau (2), ladite fibre optique (6) étant le siège d'une biréfringence induite lorsqu'elle est soumise à une force de pression selon un diamètre, caractérisé en ce qu'il comprend en outre des moyens élastiques (5', 8, 9) exerçant une précontrainte d'amplitude prédéterminée sur ladite fibre optique (6), de manière à diminuer des défauts dits "d'excentration", en ce que le plateau (2') est rigide, en ce que ces moyens élastiques comprennent un diaphragme de précontrainte (5') et une structure de contact (8, 9) avec ladite fibre optique (6) et en ce que celle-ci est enserrée entre la structure de contact (8, 9) et ledit plateau (2') et des moyens (7') permettant de rapprocher la structure de contact (8, 9) du plateau (2'), de manière à compresser la fibre optique (6) et obtenir ladite précontrainte d'amplitude prédéterminée.

6.  Appareil selon la revendication 5, caractérisé en ce que ladite structure de contact comprend un premier anneau (8), en matériau élastique, surmonté d'un second anneau rigide (9), en contact avec ladite fibre optique (6), en ce que les faces dudit diaphragme de précontrainte (5') et dudit plateau (2') étant situées à une distance déterminée (*d*) l'une de l'autre, dans un l'état initial, lesdits moyens (7') permettant de rapprocher la structure de contact (8, 9) du plateau (2') comprennent une entretoise (70'), disposée entre le plateau (2') et le diaphragme de précontrainte (5'), dans une zone centrale de celui-ci, et de longueur déterminée ($l_e$) inférieure à ladite distance déterminée (*d*), de manière à pouvoir créer une flèche prédéterminée (*f*) au centre d'au moins l'un des disques (4), et des moyens de serrage (71') rapprochant le diaphragme de précontrainte (5') du plateau (2'), de manière à créer ladite précontrainte d'amplitude prédéterminée par déformation élastique de ce diaphragme de précontrainte (5').

7.  Appareil de mesure de force à capteur optique (1), comprenant un plateau de mesure (2) sur lequel on applique une force à mesurer (*P*), un socle (3) et un capteur optique de mesure de contraintes dues à ladite force à mesurer (*P*), le capteur étant du type polarimétrique comprenant au moins une fibre optique (6) disposée entre ledit plateau (2) et ledit socle (3), ladite fibre optique (6) étant le siège d'une biréfringence induite lorsqu'elle est soumise à une force de pression selon un diamètre, caractérisé en ce que, un nombre minimal de spires de fibre optique (6) étant nécessaire pour une gamme de forces à mesurer prédéterminée, il comprend au moins une spire de fibre optique supplémentaire (6'), de manière à minimiser les défauts d'excentration dus à une non-planéité de surface d'une structure de contact (4, 5) transmettant la force à mesurer ($P$) et créant sur la fibre optique ladite contrainte.

**8.** Appareil selon l'une des revendications 1 ou 5 ou 7, caractérisé en ce que, la fibre optique (6) comprenant un coeur et une gaine formant guide d'onde lumineuse (62), entouré d'une enveloppe de protection (62) en matériau plastique, la fibre optique (6) est dépourvue de ladite enveloppe de protection (62) dans les zones de contact avec ladite structure de contact (4, 5), de manière à éviter un fluage du matériau plastique constituant l'enveloppe de protection (62).

**9.** Appareil selon l'une des revendications 1 ou 5 ou 7, caractérisé en ce que, la fibre optique (6) comprenant un coeur et une gaine formant guide d'onde lumineuse (62), entouré d'une enveloppe de protection (62) en matériau plastique, la fibre optique (6) est dotée d'une gaine à base de composé organique, dont l'épaisseur est inférieure à 15 micromètres.

**10.** Pèse-personne, caractérisé en ce qu'il comprend un appareil de mesure de force (1) selon l'une quelconque des revendications 1 à 9.

**Claims**

**1.** Optical-sensor force measurement apparatus (1), comprising a measurement stage (2) to which a force to be measured ($P$) is applied, a baseplate (3) and an optical sensor for measuring stresses due to the said force to be measured ($P$), the sensor being of the polarimetric type comprising at least one optical fibre (6) placed between the said stage (2) and the said baseplate (3), the said optical fibre (6) being the seat of birefringence induced when it is subjected to a compressive force along a diameter, characterized in that it furthermore comprises elastic means which exert a prestress of predetermined amplitude on the said optical fibre (6), so as to reduce so-called "offcentring" errors, and in that these elastic means comprise an upper plate (4) and a lower plate (5) which are placed on either side of the said optical fibre (6) and in contact with it, so as to form a contact structure which also transfers the force to be measured ($P$), and means (7) which allow these two plates (4, 5) to be moved closer together so as to compress the optical fibre (6) and obtain the said prestress of predetermined amplitude.

**2.** Apparatus according to Claim 1, characterized in that, since its structure is circular, the said plates (4, 5) of the elastic means are elastically deformable discs, each comprising a circular peripheral ring (41, 51) the bottom of which is in contact with the said optical fibre (6), those faces of the discs which are facing each other being at a defined distance ($d$) from each other in an initial state, in that the said means (7) allowing the central regions of the two plates (4, 5) to be brought closer together comprise a spacer (70) which is placed between the two discs (4, 5) in a central region and has a defined length ($l_e$) less than the said defined distance ($d$) so as to be able to create a predetermined deflection ($f$) at the centre of at least one (4) of the discs, and clamping means (71, 72) which bring the said central regions closer together in order to obtain this deflection ($f$) so as to create the said prestress of predetermined amplitude by elastically deforming the disc (4).

**3.** Apparatus according to Claim 2, characterized in that the said discs (4, 5) are drilled with central holes (42, 52), in that the said clamping means bringing the said central regions of the two discs (4, 5) closer together and creating the said deflection ($f$) comprise a screw-and-nut assembly (71, 72), the body of the screw (71) being slipped into the said spacer (70) and into the central holes (42, 52), in that the head of the screw (71) and the nut (72) are placed on either side of the assembly formed by the two discs (4, 5) so as to bring the central regions closer together by screwing the nut (72) on the screw (71) and to bring the discs (4, 5) into abutment with the said spacer (70), and in that it is furthermore provided with means (43) for preventing any relative rotational movement of these discs (4, 5), about the axis ($\Delta$) formed by the spacer (70), when they are in abutment with the spacer (70).

**4.** Apparatus according to Claim 2, characterized in that the said circular peripheral rings (41, 51) are "U"-shaped grooves placed back to back, in that the said stage (2) and the said baseplate (3) are each fastened to a solid annulus (20, 30) and in that these solid annuli (20, 30) are introduced into the said "U"-shaped grooves so that the circular peripheral rings (41, 51) are held fast to the solid annuli (20, 30).

**5.** Optical-sensor force measurement apparatus (1), comprising a measurement stage (2') to which a force to be measured ($P$) is applied and an optical sensor for measuring stresses due to the said force to be measured ($P$), the sensor being of the polarimetric type comprising at least one optical fibre (6) placed beneath the said stage (2), the said optical fibre (6) being the seat of birefringence induced when it is subjected to a compressive force along a diameter, characterized in that it furthermore comprises elastic means (5', 8, 9) which exert a prestress of predetermined amplitude on the said optical fibre (6) so as to reduce so-called "off-centring" errors, in that the stage (2') is rigid, in that these elastic means comprise a prestressing diaphragm (5') and a structure (8, 9) for contact with the said optical fibre (6) and in that the latter is gripped between the contact structure (8, 9) and the said stage (2') and means (7') allowing the contact structure (8, 9) and the stage (2') to be brought closer together so as to compress the optical fibre (6) and obtain the said prestress of predetermined amplitude.

6. Apparatus according to Claim 5, characterized in that the said contact structure comprises a first annulus (8), made of elastic material, surmounted by a rigid second annulus (9) in contact with the said optical fibre (6) and in that, with the faces of the said prestressing diaphragm (5') and of the said stage (2') lying at a defined distance ($d$) apart in an initial state, the said means (7') allowing the contact structure (8, 9) and the stage (2') to be brought closer together comprise a spacer (70') which is placed between the stage (2') and the prestressing diaphragm (5'), in a central region of the latter, and has a defined length ($l_e$) less than the said defined distance ($d$), so as to be able to create a predetermined deflection ($f$) at the centre of at least one (4) of the discs, and clamping means (71') bringing the prestressing diaphragm (5') closer to the stage (2') so as to create the said prestress of predetermined amplitude by elastically deforming this prestressing diaphragm (5').

7. Optical-sensor force measurement apparatus (1), comprising a measurement stage (2) to which a force to be measured ($P$) is applied, a baseplate (3) and an optical sensor for measuring stresses due to the said force to be measured ($P$), the sensor being of the polarimetric type comprising at least one optical fibre (6) placed between the said stage (2) and the said baseplate (3), the said optical fibre (6) being the seat of birefringence induced when it is subjected to a compressive force along a diameter, characterized in that, with a minimal number of turns of optical fibre (6) being needed for a predetermined range of forces to be measured, it comprises at least one additional turn of optical fibre (6') so as to minimize the offcentring errors due to any surface non-planarity of a contact structure (4, 5) transferring the force to be measured (P) and creating the said stress on the optical fibre.

8. Apparatus according to one of Claims 1 or 5 or 7, characterized in that, with the optical fibre (6) comprising a core and a cladding which form a light waveguide (63) surrounded by a protective jacket (62) made of plastic, the optical fibre (6) is stripped of the said protective jacket (62) in the regions of contact with the said contact structure (4, 5) so as to prevent any creep of the plastic making up the protective jacket (62).

9. Apparatus according to one of Claims 1 or 5 or 7, characterized in that, with the optical fibre (6) comprising a core and a cladding which form a light waveguide (63) surrounded by a protective jacket (62) made of plastic, the optical fibre (6) is provided with a cladding based on an organic compound, the thickness of which is less than 15 micrometres.

10. Bathroom scales, characterized in that they comprise a force measurement apparatus (1) according to any one of Claims 1 to 9.

**Patentansprüche**

1. Kraftmeßeinrichtung mit optischem Sensor (1), welche eine Meßplatte (2), auf welcher eine zu messende Kraft ($P$) angeordnet wird, einen Sockel (3) und einen optischen Meßfühler für die von der zu messenden Kraft ($P$) erzeugten Belastungen aufweist, wobei der Fühler von der polarimetrischen Art ist mit wenigstens einer Lichtleitfaser (6), welche zwischen der Platte (2) und dem Sockel (3) angeordnet ist, wobei die Lichtleitfaser (6) der Sitz einer induzierten Doppelbrechung ist, wenn sie einer Druckkraft entlang eines Durchmessers ausgesetzt wird, dadurch gekennzeichnet, daß sie außerdem elastische Vorrichtungen aufweist, welche eine Vorspannung mit vorbestimmter Stärke auf die Lichtleitfaser (6) derart ausüben, daß sogenannte "Außermittigkeits"-Fehler verringert werden, und daß diese elastischen Vorrichtungen eine obere Platte (4) und eine untere Platte (5), welche beidseits von der Lichtleitfaser (6) und im Kontakt mit ihr angeordnet sind, so daß sie eine Kontaktstruktur bilden, welche auch die zu messende Kraft (P) überträgt, und Vorrichtungen (7) aufweisen, welche ermöglichen, diese beiden Platten (4,5) derart einander anzunähern, daß sie die Lichtleitfaser (6) zusammendrücken und die Vorspannung mit vorbestimmter Stärke erreicht wird.

2. Einrichtung gemäß Anspruch 1, dadurch gekennzeichnet, daß, da ihre Bauweise kreisförmig ist, die Platten (4,5) der elastischen Vorrichtungen elastisch verformbare Scheiben sind, wobei sie jeweils einen kreisförmigen Umfangskranz (41,52) aufweisen, dessen Boden im Kontakt mit der Lichtleitfaser (6) ist, wobei die sich einander gegenüberliegenden Flächen der Scheiben mit einem bestimmten Abstand (*d*) voneinander in einem Anfangszustand angeordnet sind, und daß die Vorrichtungen (7), welche ermöglichen, die Mittelbereiche der beiden Platten (4,5) einander anzunähern, einen Steg (70) aufweisen, welcher zwischen den beiden Scheiben (4,5) in einem Mittelbereich und mit bestimmter kleinerer Länge (*l$_e$*) als der bestimmte Abstand (*d*) derart angeordnet ist, daß ein vorbestimmter Durchhang (*f*) im Mittelpunkt von wenigstens einer der Scheiben (4) geschaffen werden kann, und sie Spannvorrichtungen (71,72) aufweisen, welche die Mittelbereiche einander annähern, um diesen Durchhang (*f*) zu erreichen, so daß die Vorspannung mit vorbestimmter Stärke durch elastische Verformung der Scheibe (4) hergestellt wird.

3. Einrichtung gemäß Anspruch 2, dadurch gekennzeichnet, daß die Scheiben (4,5) von zentralen Öffnungen (42,52) durchbohrt sind, daß die Spannvorrichtungen, welche die Mittelbereiche der beiden Scheiben (4,5) einander annähern und den Durchhang (*f*) herstellen, eine Schrauben-Mutter-Anordnung (71,72) aufweisen, wobei der Körper der Schraube (71) in den Steg (70) und in die zentralen Öffnungen (42,52) eingefädelt ist, daß der Kopf der Schraube (71) und die Mutter (72) beidseits von der von den beiden Scheiben (4,5) gebildeten Anordnung derart angeordnet sind, daß die Mittelbereiche durch Festziehen der Mutter (72) auf der Schraube (71) einander angenähert und die Scheiben (4,5) in Anschlag gegen den Steg (70) gebracht werden, und daß außerdem Vorrichtungen (43) vorgesehen sind, um eine relative Verschiebung in Drehung dieser Scheiben (4,5) um die Achse (Δ) zu verhindern, welche von dem Steg (70) gebildet wird, wenn sie sich im Anschlag gegen den Steg (70) befinden.

4. Einrichtung gemäß Anspruch 2, dadurch gekennzeichnet, daß die kreisförmigen Umfangskränze (41,51) "U"-förmige Auskehlungen sind, welche umgekehrt angeordnet sind, daß die Platte 2 und der Sockel (3) jeweils einstückig mit einem Vollring (20,30) ausgebildet sind, und daß diese Vollringe (20,30) in die "U"-förmigen Auskehlungen derart eingeschoben werden, daß sie mit den kreisförmigen Umfangskränzen (41,51) einstückig ausgebildet werden.

5. Kraftmeßeinrichtung mit optischem Sensor (1) welche eine Meßplatte (2'), auf welcher eine zu messende Kraft (*P*) angeordnet wird, und einen optischen Meßfühler für die von der zu messenden Kraft (*P*) erzeugten Belastungen aufweist, wobei der Fühler von der polarimetrischen Art ist mit wenigstens einer Lichtleitfaser (6), welche unter der Platte (2')) angeordnet ist, wobei die Lichtleitfaser (6) der Sitz einer induzierten Doppelbrechung ist, wenn sie einer Druckkraft entlang eines Durchmessers ausgesetzt wird, dadurch gekennzeichnet, daß sie außerdem elastische Vorrichtungen (5',8,9) aufweist, welche eine Vorspannung mit vorbestimmter Stärke auf die Lichtleitfaser (6) derart ausüben, daß sogenannte "Außermittigkeits"-Fehler verringert werden, daß die Platte (2') steif ist, daß diese elastischen Vorrichtungen eine Vorspannmembran (5') und eine Kontaktstruktur (8,9) mit der Lichtleitfaser aufweisen, und daß diese zwischen der Kontaktstruktur (8,9) und der Platte (2') und den Vorrichtungen (7'), welche ermöglichen, die Kontaktstruktur (8,9) der Platte (2') anzunähern, derart festgeklemmt ist, daß die Lichtleitfaser (6) zusammengedrückt und die Vorspannung mit vorbestimmter Stärke erreicht wird.

6. Einrichtung gemäß Anspruch 5, dadurch gekennzeichnet, daß die Kontaktstruktur einen ersten Ring (8) aus elastischem Material aufweist, über welchem ein zweiter fester Ring (9) angeordnet ist, welcher sich im Kontakt mit der Lichtleitfaser (6) befindet, daß die Flächen der Vorspannmembran (5') und der Platte (2') mit einem bestimmten Abstand (*d*) voneinander in einem Anfangszustand angeordnet sind, und daß die Vorrichtungen (7'), welche ermöglichen, die Kontaktstruktur (8,9) der Platte (2') anzunähern, einen Steg (70') aufweisen, welcher zwischen der Platte (2') und der Vorspannmembran (5') in deren Mittelbereich angeordnet ist und eine bestimmte Länge (*l$_e$*) aufweist, welche kleiner als der bestimmte Abstand (*d*) ist, so daß ein vorbestimmter Durchhang (*f*) im Mittelpunkt von wenigstens einer der Scheiben (4) erzeugt wird, und sie Spannvorrichtungen (71') aufweisen, welche die Vorspannmembran (5') der Platte (2') derart annähern, daß die Vorspannung mit vorbestimmter Stärke durch elastische Verformung dieser Vorspannmembran (5') hergestellt wird.

7. Kraftmeßeinrichtung mit optischem Sensor (1) welche eine Meßplatte (2), auf welcher eine zu messende Kraft (*P*) angeordnet wird, einen Sockel (3) und einen optischen Meßfühler für die von der zu messenden Kraft (*P*) erzeugten Belastungen aufweist, wobei der Fühler von der polarimetrischen Art ist mit wenigstens einer Lichtleitfaser (6), welche zwischen der Platte (2) und dem Sockel (3) angeordnet ist, wobei die Lichtleitfaser (6) der Sitz einer induzierten Doppelbrechung ist, wenn sie einer Druckkraft entlang eines Durchmessers ausgesetzt wird, dadurch gekennzeichnet, daß sie, da eine Mindestanzahl von Lichtleitfaserwindungen (6) für einen vorbestimmten Kraftmeßbereich erforderlich ist, wenigstens eine zusätzliche Lichtleitfaserwindung (6') aufweist, so daß die Außermittigkeitsfehler minimiert werden, welche aus einer Oberflächenunebenheit einer Kontaktstruktur (4,5) herrühren, welche die zu messende Kraft (*P*) überträgt und die Belastung auf der Lichtleitfaser herstellt.

8. Einrichtung gemäß einem der Ansprüche 1 oder 5 oder 7, dadurch gekennzeichnet, daß die Lichtleitfaser (6) einen Kern und eine Hülle aufweist, welche einen Lichtwellenleiter (62) bildet, welcher von einer Schutzhülle (62) aus Kunststoffmaterial umgeben ist, wobei die Lichtleitfaser (6) in den Kontaktbereichen mit der Kontaktstruktur (4,5) derart von der Schutzhülle (62) befreit ist, daß ein Kriechen des die Schutzhülle (62) bildenden Kunststoffmaterials vermieden wird.

9. Einrichtung gemäß einem der Ansprüche 1 oder 5 oder 7, dadurch gekennzeichnet, daß die Lichtleitfaser (6) einen Kern und eine Hülle aufweist, welche einen Lichtwellenleiter (62) bildet, welcher von einer Schutzhülle (62) aus Kunststoffmaterial umgeben ist, wobei die Lichtleitfaser (6) mit einer Hülle auf der Basis einer organischen Verbindung versehen ist, deren Dicke weniger als 15 Mikrometer beträgt.

10. Personenwaage, dadurch gekennzeichnet, daß sie eine Kraftmeßeinrichtung (1) gemäß irgendeinem der Ansprüche 1 bis 9 aufweist.

FIG.1

FIG.2a

FIG.2b

FIG.2c

FIG.3a

FIG.3b

FIG.3c

FIG_4a

FIG_4b

FIG. 4c

FIG. 4d

FIG. 4e

FIG. 5

EP 0 747 678 B1

16

# FIG.6